# EUROPÄISCHE PATENTSCHRIFT

(11) **EP 2 920 000 B1**
(45) Veröffentlichungstag und Bekanntmachung des Hinweises auf die Patenterteilung: **16.08.2017**
(21) Anmeldenummer: 13750702.6
(22) Anmeldetag: 20.08.2013
(51) Int. Cl.: B42C 11/06

(54) **BUCHARTIGES DOKUMENT, INSBESONDERE IDENTIFIKATIONSDOKUMENT, DATENSEITE SOWIE VERFAHREN ZUR HERSTELLUNG FÜR EIN BUCHARTIGES DOKUMENT**
BOOK-LIKE DOCUMENT, IN PARTICULAR IDENTIFICATION DOCUMENT, DATA PAGE, AND METHOD FOR PRODUCING A BOOK-LIKE DOCUMENT
DOCUMENT EN FORME DE LIVRET, EN PARTICULIER DOCUMENT D'IDENTIFICATION, PAGE DE DONNÉES, AINSI QUE PROCÉDÉ DE FABRICATION D'UN DOCUMENT EN FORME DE LIVRET

(30) Priorität: 11.09.2012 DE 102012108454
(43) Veröffentlichungstag der Anmeldung: 23.09.2015
(73) Patentinhaber: Bundesdruckerei GmbH, 10969 Berlin (DE)
(72) Erfinder: EHREKE, Jens, 12437 Berlin (DE); FELSKE, Thomas, 14163 Berlin (DE); GAHLBECK, Jeffry, 15517 Fürstenwald (DE); KNEBEL, Michael, 13086 Berlin (DE); LEOPOLD, André, 10119 Berlin (DE); MÄRTENS, Detlef, 13599 Berlin (DE); SEIDEL, Rainer, 13467 Berlin (DE)
(74) Vertreter: Mammel und Maser
(86) Internationale Anmeldenummer: PCT/EP2013/067267
(87) Internationale Veröffentlichungsnummer: WO 2014/040825

(56) Entgegenhaltungen:
- DE-A1-102008 023 411
- GB-A- 2 050 249
- US-A- 6 145 882

## Beschreibung

Buchartiges Dokument, insbesondere Identifikationsdokument, Datenseite sowie Verfahren zur Herstellung für ein buchartiges Dokument

Die Erfindung betrifft ein buchartiges Dokument, insbesondere Identifikationsdokument, mit einem Bucheinband und mit mehreren Datenseiten. Des Weiteren betrifft die Erfindung eine Datenseite für ein solches buchartiges Dokument sowie ein Verfahren zur Herstellung eines buchartigen Dokumentes.

Aus der DE 10 2008 023 411 B1 ist ein buchartiges Dokument, insbesondere ein Identifikationsdokument, bekannt. Dieses buchartige Dokument umfasst einen Bucheinband und mehrere Datenseiten, wobei der Bucheinband und die Datenseiten jeweils einen Falzbereich mit einer Falzkante aufweisen. Die Datenseiten sind mit zumindest einem Faden durch eine zumindest abschnittsweise ausgebildete Naht entlang der Falzkante zu einem Buchblock verbunden. Der Buchblock wird mittels eines Fadens mit dem Versatz verbunden. Nach dem Einnähen des Buchblocks mit dem Vorsatz wird der Bucheinband oder der Vorsatz aufgebracht. Durch die Ausgestaltung des Fadenmaterials sowie der Einbindung des Fadens in den Buchblock und/oder den Vorsatz der Buchdecke kann die Fälschungssicherheit erhöht werden, da die Manipulation zum Auftrennen des zumindest einen Fadens in einfacher Weise nachgeprüft werden kann.

Diese Nähtechnologie ist allgemein bekannt und hat sich prinzipiell bewährt. Allerdings ist das Zusammennähen von Datenseiten und des Versatzes des Bucheinbandes im Hinblick auf den Maschinendurchsatz zeitaufwändig und erfordert einen hohen Materialverbrauch.

Aus der US 6,145,882 A ist ein buchartiges Dokument nach dem Oberbegriff des Anspruchs 1 bekannt, welches einen Bucheinband mit mehreren Datenseiten aufweist. Die Datenseiten sind in dem Falzbereich des Bucheinbandes durch Schweißen unlösbar eingebunden.

Aus der GB 2 050 249 A geht des Weiteren ein Sicherheitsdokument hervor, bei welchem schmelzbares thermoplastisches Material durch Perforationen in Datenseiten hindurchfließt, um die Datenseiten an einen Bucheinband anzubinden.

Der Erfindung liegt die Aufgabe zugrunde, ein buchartiges Dokument sowie Datenseiten hierzu und ein Verfahren zur Herstellung eines solchen buchartigen Dokumentes vorzuschlagen, wodurch eine Reduzierung im Materialverbrauch und eine Verkürzung der Herstellungszeit zumindest unter Beibehaltung der bisherigen Fälschungssicherheit ermöglicht wird.

Diese Aufgabe wird durch ein buchartiges Dokument mit den Merkmalen des Anspruchs 1, durch eine Datenseite mit den Merkmalen des Anspruchs 8 und ein Verfahren zur Herstellung des buchartigen Dokumentes mit den Merkmalen des Anspruchs 15 gelöst. Weitere vorteilhafte Ausgestaltungen und Erfindung ergeben sich aus den jeweils anhängigen Ansprüchen.

Diese Aufgabe wird erfindungsgemäß durch ein buchartiges Dokument nach Anspruch 1 gelöst. Dadurch kann ohne zusätzliche vorbereitende Maßnahmen unmittelbar ein Einbinden der zumindest einen Datenseite in den Bucheinband oder die Bildung eines Buchblocks zum Einbinden in den Bucheinband ermöglicht sein. Dadurch kann eine erhebliche Verkürzung in der Herstellungszeit erzielt werden, da weder Stanzungen zum Durchführen des Fadens erforderlich sind, noch der Nähvorgang als solcher durchgeführt werden muss. Darüber hinaus wird die Fälschungssicherheit erhöht, da bei einem Manipulationsversuch durch ein Herauslösen oder einen Austausch von einzelnen Datenseiten die Verbindungsstelle oder die an die Verbindungsstelle angrenzende Datenseite zerstört wird, da die Verbindungsstellen zwischen dem Bucheinband und der Datenseite sowie gegebenenfalls weiteren Datenseiten unlösbar sind. Dadurch ist optisch in einfacher Weise eine Manipulation erkennbar.

Bei dem buchartigen Dokument ist die Falzkante der zumindest einen Datenseite und die Falzkante im Falzbereich des Bucheinbandes miteinander ohne mechanische Verbindungselemente unlösbar verbunden. Dadurch kann ein nähfadenloses buchartiges Dokument geschaffen werden. Darüber hinaus werden zum Einbinden der Datenseite oder der Datenseiten in den Buchdeckeneinband keine weiteren mechanischen Verbindungselemente eingesetzt. Vielmehr sind hierfür ausschließlich eine oder mehrere Schweißstellen oder Klebestellen entlang der Falzkante im Falzbereich der Datenseite und des Bucheinbandes zur Bildung der Verbindungsstelle vorgesehen.

Das buchartige Dokument kann Datenseiten umfassen, die zu einem Buchblock durch Laminieren oder Schweißen miteinander verbunden sind und der Buchblock in den Bucheinband unlösbar eingebunden ist. Beispielsweise können hierfür entlang der Falzkante einzelne Schweiß-oder Klebestellen zum Verbinden der Datenseite zu einem Buchblock eingebracht und in den dazwischen liegenden Abschnitten Schweiß- oder Klebepunkte hergestellt werden, um den Buchblock mit dem Bucheinband zu verbinden.

Das buchartige Dokument kann zumindest eine Datenseite als Personalisierdatenseite umfassen. Solche Personalisierdatenseiten sind bevorzugt gemäß dem ICAO-Standard ausgebildet und umfassen zumindest ein Bild des Dokumenteninhabers, eine OCR-maschinenlesbare Zeile sowie weitere Personalisierdaten. Darüber hinaus können eine Transpondereinheit sowie weitere Sicherheitsmerkmale vorgesehen und/oder in der Transpondereinheit abgespeichert sein.

Eine alternative Ausführungsform des buchartigen Dokuments sieht an einer zum Buchblock weisenden Innenseite des Bucheinbandes eine Personalisierdatenseite vor. Der Bucheinband umfasst somit gleichzeitig die Personalisierdatenseiten. Bevorzugt wird eine sogenannte Laminierkarte ausgebildet, das heißt, dass eine Personalisierdatenseite beidseitig von Kunststoffschichten umgeben und eingebunden ist und diese gleichzeitig den Bucheinband bilden.

Eine weitere alternative Ausgestaltung des buchartigen Dokumentes sieht vor, dass der Bucheinband eine im Falzbereich angeschweißte oder laminierte Lasche aufweist, an der eine Datenseite, insbesondere Personalisierdatenseite, einhängbar ist. Dies weist den Vorteil auf, dass das buchartige Dokument dezentral fertiggestellt werden kann, das heißt, dass nach der Herstellung der Personalisierdatenseite durch das Einhängen dieser Personalisierdatenseite in die Lasche das buchartige Dokument komplettiert wird. Dabei werden vorzugsweise unlösbare Schweiß- oder Klebestellen zwischen den aneinander grenzenden Bereichen der Personalisierdatenseite und der Lasche gebildet.

Eine weitere bevorzugte Ausführungsform des buchartigen Dokumentes sieht vor, dass die Datenseiten entlang einer Seitenkante zueinander ausgerichtet sind und einen Buchblockrücken bilden, und die Datenseiten durch eine Kunststoff- oder Klebeschicht zueinander fixiert oder nach Art eines Klemmleistenprinzips oder einer Durchheftung die Datenseiten zueinander fixiert und durch Schweißen oder Kleben in dem Bucheinband unlösbar eingebunden sind. Durch das nähfadenlose Einbinden des Buchblocks kann die Ausbildung des Buchblocks variabel gestaltet werden, so dass die Datenseiten als Einzelseiten ohne Falzkante durch den Buchblockrücken beziehungsweise durch eine Klebe- oder Schweißverbindung im Bereich des Buchblockrückens miteinander verbindbar sind.

Eine weitere alternative Ausgestaltung des buchartigen Dokumentes sieht vor, dass die Datenseiten einseitig ausgebildet sind und eine Lasche aufweisen, welche in der Mitte geteilt ist, so dass bei der Bildung einer Doppelseite mit zwei Einzelseiten eine Laschenhälfte oberhalb und die andere Laschenhälfte unterhalb der gegenüberliegenden Laschenhälfte der Einzelseite anordenbar und mit dem Bucheinband in dieser Anordnung eingebunden ist. Durch die unlösbare Einbindung durch Schweißen oder Laminieren kann der Falzbereich variabel ausgestaltet werden. Dadurch kann auch wiederum die Fälschungssicherheit erhöht sein.

Die der Erfindung zugrunde liegende Aufgabe wird des Weiteren durch eine Datenseite nach Anspruch 8 gelöst. Dadurch wird in einfacher Weise ein unlösbares Einbinden der zumindest einen Datenseite und/oder des Vorsatzes und/oder der Personalisierdatenseite in dem Bucheinband ermöglicht, da lediglich die zumindest eine Schweißstelle oder Klebestelle herzustellen ist, ohne dass weitere Arbeitsschritte erforderlich sind. Insbesondere kann wiederum ohne zusätzliche vorbereitende Maßnahmen unmittelbar ein Einbinden der zumindest einen Datenseite in den Bucheinband oder die Bildung eines Buchblockes zum Einbinden in den Bucheinband ermöglicht sein.

Gemäß einer ersten vorteilhaften Ausführungsform der an der Datenseite angeordneten Verbindungskomponente weist diese einen zumindest abschnittsweise ausgebildeten Falzbereich aus schweißbarem Kunststoff auf. Dadurch bedarf es beim Einbinden der Datenseiten im Bucheinband keiner weiteren Aufbereitung der Datenseite. Vielmehr kann unmittelbar durch ein Schweißverfahren eine unlösbare Verbindung geschaffen werden.

Bevorzugt ist die Datenseite ein- oder beidseitig mit einer Kunststoffbeschichtung oder Klebebeschichtung versehen. Alternativ kann auch auf einer Seite eine Kunststoffbeschichtung und auf der gegenüberliegenden Seite eine Klebebeschichtung im Falzbereich vorgesehen sein.

Die Datenseite ist bevorzugt doppelseitig ausgebildet. Im mittleren Bereich der Doppelseite ist bevorzugt der Falzbereich mit der Verbindungskomponente gebildet. Alternativ kann die Datenseite als Einzelseite mit einer Lasche vorgesehen sein, wobei zwischen dem Datenbereich und der Lasche der Falzbereich ausgebildet ist.

Die Datenseite kann alternativ im Falzbereich Durchbrechungen aufweisen, die bei Verwendung mit mehreren Datenseiten oder dem Bucheinband eine Schweiß- oder Klebestelle bilden oder mit einer Kunststoffbeschichtung verfüllbar sind und eine Schweiß- oder Klebestelle bilden. Bei einer ersten Ausgestaltung fließen im Falzbereich angeordnete Verbindungskomponenten zumindest teilweise in die Durchbrechungen ein, um die Verbindungsstelle zu bilden. Bei einer zweiten Alternative wird zur Bildung der Schweiß- oder Klebestellen ein Kunststoff- oder Klebestreifen oder dergleichen ergänzend eingebracht.

Eine weitere alternative Ausführungsform der Datenseite sieht vor, dass zumindest im Falzbereich lange Kunststofffasern eingebracht sind beziehungsweise der Falzbereich aus langfasrigem Kunststoff gebildet ist. Solche Kunststofffasern können eine Länge von 1 bis 50 mm aufweisen und aus Polyethylen (PE), Polypropylen (PP), Polyvinylchlorid (PVC), Polyamid (PA), Polycarbonat (PC) oder Polyethylenterephthalat (PET) bestehen. Dadurch können die Kunststofffasern zur Bildung von Schweißstellen eingesetzt werden. Gleichzeitig können die eingebrachten Kunststofffasern eine eigene Struktur bilden, die als Sicherheitsmerkmal verwendbar ist.

Des Weiteren kann die zumindest abschnittsweise im Falzbereich vorgesehene Verbindungskomponente zumindest ein Sicherheitsmerkmal enthalten. Beispielsweise können Kinegramme, Hologramme vorgesehen sein. Alternativ oder zusätzlich können die Sicherheitsmerkmale in die Verbindungskomponente eingebracht oder aufgebracht sein. Diesbezüglich kann es sich um Prägungen, Lumineszenzstoffe oder dergleichen handeln.

Die der Erfindung zugrunde liegende Aufgabe wird des Weiteren durch ein Verfahren zur Herstellung eines buchartigen Dokumentes, insbesondere nach einem der Ansprüche 1 bis 7, gelöst, bei dem zumindest eine Datenseite nach einem der Ansprüche 8 bis 14 eingesetzt wird, so dass die zumindest eine Datenseite mit dem Bucheinband durch Schweißen oder Laminieren unlösbar eingebunden wird. Dadurch kann eine einfache und kostengünstige Herstellung eines solchen buchartigen Dokumentes ermöglicht werden.

Die zumindest eine Datenseite wird bevorzugt durch Heißlaminieren oder Kaltlaminieren eingebunden. Beim Heißlaminieren wird die zumindest eine Verbindungskomponente im Falzbereich der Datenseite und/oder des Bucheinbandes erwärmt, so dass an den Kontaktstellen eine thermische Verbindung entsteht. Beim Kaltlaminieren kann eine solche Verbindung ohne thermischen Einfluss ermöglicht sein.

Alternativ werden die zumindest eine Datenseite und der Bucheinband durch ein Ultraschall-Schweißverfahren unlösbar miteinander verbunden. Dadurch können in Abhängigkeit der Auswahl des Ultraschall-Schweißverfahrens unterschiedliche Schweißpunkte oder Schweißstellen geschaffen werden. Beispielsweise kann Ultraschall-Nieten, Ultraschall-Punktschweißen, Ultraschall-Bördeln, Ultraschall-Verdämmen, Ultraschall-Einsenken, Ultraschall-Verkrallen, Ultraschall-Zapfenschweißen oder Ultraschall-Quetschnahtschweißen eingesetzt werden.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine perspektivische Darstellung eines buchartigen Dokumentes,
Figur 2 eine schematische Schnittdarstellung des Dokumentes gemäß Figur 1,
Figur 3 eine schematische Schnittdarstellung einer alternativen Ausführungsform zu Figur 2,
Figur 4 eine schematische Schnittdarstellung einer weiteren alternativen Ausführungsform zu Figur 2,
Figur 5 eine schematische Teilansicht auf eine Personalisierdatenseite gemäß Figur 4,
Figuren 6 bis 9 schematische Ansichten auf alternative Ausführungsformen von Datenseiten, und
Figur 10 eine schematische Seitenansicht einer alternativen Ausführungsform eines Buchblocks für ein buchartiges Dokument.

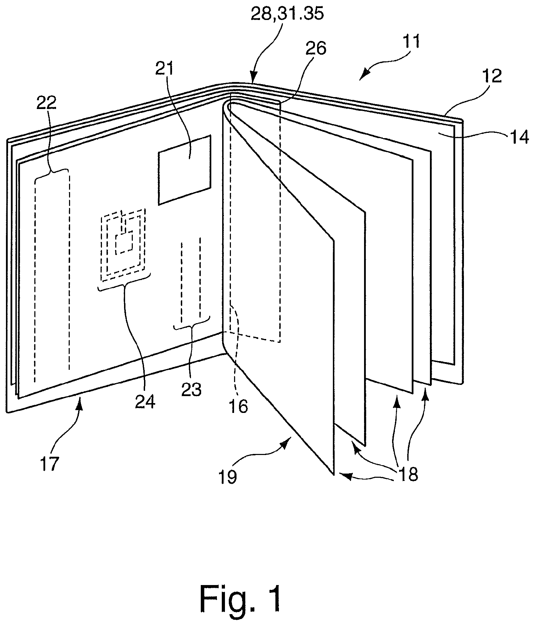

In Figur 1 ist eine erste Ausführungsform eines buchartigen Dokumentes 11 dargestellt. Bei diesem Dokument 11 handelt es sich beispielsweise um ein Identifikationsdokument wie einen Reisepass oder einen Personalausweis. Das Dokument 11 umfasst einen Bucheinband 12. Auf einer Innenseite des Bucheinbandes 12 ist ein Vorsatz 14 vorgesehen, das an dem Bucheinband 12 befestigt, insbesondere verklebt, ist. Über eine gemeinsame Verbindungsstelle 16 ist eine Personalisierdatenseite 17 mit weiteren Datenseiten 18 und dem Vorsatz 14 verbunden und bildet beispielsweise einen Buchblock 19. Der Buchblock 19 kann auch nur aus Datenseiten 18 und einer Personalisierdatenseite 17 oder nur aus Datenseiten 18 bestehen. Die Personalisierdatenseite 17 ist beispielsweise gemäß ICAO-Standard ausgebildet und umfasst ein Bild 21 des Dokumenteninhabers, eine OCR-maschinenlesbare Zeile 22 sowie weitere Personalisierdaten 23.

Die Personalisierdatenseite 17 kann des Weiteren eine Transpondereinheit 24 umfassen, in der die Daten des Dokumenteninhabers und/oder weitere Sicherheitsmerkmale abgespeichert sein können. Die Personalisierdatenseite 17 ist beispielsweise als Einlegeblatt ausgebildet und kann gemäß dem Ausführungsbeispiel eine Lasche 26 umfassen, die sich über die Verbindungsstelle 16 hinaus erstreckt. Alternativ kann anstelle der Lasche 26 eine vollständige Personalisierungs- oder Datenseite vorgesehen sein.

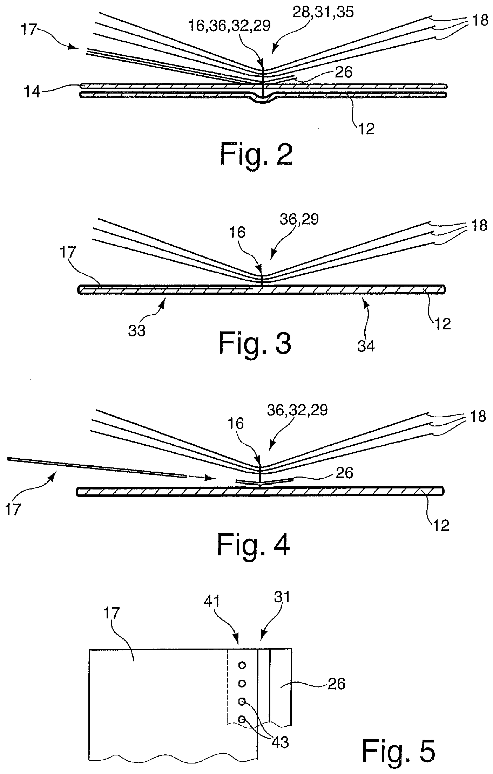

In Figur 2 ist eine schematische Schnittdarstellung des buchartigen Dokumentes 11 gemäß Figur 1 dargestellt. Der darin dargestellte Aufbau des Buchblocks 19 sowie des Bucheinbandes 12 ist nur beispielhaft. Die Datenseiten 18 sind beispielsweise doppelseitig ausgebildet und weisen einen Falzbereich 28 mit einer Falzkante 29 auf. Zwischen der Lasche 26 und der Personalisierdatenseite 17 ist ebenfalls ein Falzbereich 31 mit einer Falzkante 32 gebildet. Der Bucheinband 12 umfasst eine Vorder-und eine Rückseite 33, 34, die wiederum mit einem Falzbereich 35 verbunden sind, in dem eine Falzkante 36 liegt. Die Datenseiten 18, Personalisierdatenseite 17 sowie der Bucheinband 12 sind durch eine gemeinsame Verbindungsstelle 16 unlösbar miteinander verbunden, die vorzugsweise in den Falzkanten 29, 32, 36 liegt. Diese unlösbare Verbindungsstelle 16 wird durch Schweißen oder Laminieren der einzelnen Schichten zueinander hergestellt. Zusätzlich kann zwischen der Personalisierdatenseite 17 und dem Bucheinband 12 das Vorsatz 14 vorgesehen sein.

Die Verbindungsstelle 16 kann durch einzelne, im Abstand zueinander angeordnete Schweiß- oder Klebepunkte ausgebildet sein. Ebenso können einzelne abschnittsweise streifenförmige Klebe- oder Schweißstellen die Verbindungsstelle 16 bilden, die gleich lang oder voneinander abweichend in der Länge sind. Ebenso kann die Breite oder der Verlauf der Verbindungsstelle 16 variiert werden. Es kann aber auch eine durchgehende Schweiß- oder Klebestelle vorgesehen sein, die sich entlang der Verbindungsstelle 16 - also entlang der Länge des Falzbereiches 28, 31, 35 - erstreckt.

Dieses buchartige Dokument 11 ermöglicht das Einbinden der Datenseiten 18 und/oder der Personalisierdatenseite 17 und/oder des Vorsatzes 14 in den Bucheinband 12 ohne zusätzliche mechanische Verbindungselemente, wie beispielsweise einen oder mehrere Fäden. Diese Verbindungsstelle ist frei von mechanischen Verbindungselementen, insbesondere nähfadenfrei, ausgebildet.

In Figur 3 ist eine Schnittdarstellung einer alternativen Ausführungsform eines buchartigen Dokumentes zu Figur 2 dargestellt. Bei dieser Ausführungsform ist in dem Bucheinband 12 die Personalisierdatenseite 17 integriert, das heißt, dass auf einer Innenseite des Bucheinbandes 12 die Personalisierdatenseite 17 eingebracht ist. Bei dieser Ausführungsform ist abweichend zur vorstehenden Ausführungsform der Bucheinband 12 durch wenigstens zwei miteinander durch Laminierung verbundenen flexiblen Schichten gebildet, wobei vorzugsweise die zum Buchblock 19 weisende Schicht transparent ausgebildet ist, so dass eine von der transparenten Schicht überdeckte Personalisierdatenseite 17 lesbar ist. Bei diesem Bucheinband 12 kann es sich auch eine sogenannte PC-Karte handeln, welche aus wenigstens zwei Polycarbonatschichten besteht sowie die Personalisierdatenseite 17 einbinden und vorzugsweise vollständig umschließen. Auf der Rückseite 34 des Bucheinbandes 12 kann eine weitere Datenseite 18, Personalisierdatenseite 17 oder eine Dekorseite oder dergleichen eingebracht sein.

Die Datenseiten 18 sind wiederum über die Verbindungstelle 16 zumindest abschnittsweise unverlierbar zum Falzbereich 35 des Bucheinbandes 12 verbunden.

In Figur 4 ist eine schematische Schnittdarstellung einer weiteren alternativen Ausführungsform im Aufbau eines buchartigen Dokumentes 11 zu Figur 1 dargestellt. Bei dieser Ausführungsform ist beispielsweise ein Bucheinband 12 ohne Vorsatz 14 vorgesehen. Zwischen den Datenseiten 18 und dem Bucheinband 11 ist eine Lasche 26 mit einem Falzbereich 31 ausgebildet, die zusammen mit den Datenseiten 18 und dem Bucheinband 12 unlösbar zumindest abschnittsweise entlang der Verbindungsstelle 16 verbunden sind. Ein solches noch neutrales buchartiges Dokument wird durch ein Einhängen einer Personalisierdatenseite 17 personalisiert.

In Figur 5 ist eine schematische Teilansicht zur Anbindung der Personalisierdatenseite 17 an die Lasche 26 gemäß Figur 4 dargestellt. Die Personalisierdatenseite 17 kann an den Falzbereich 31 der Lasche 26 angebracht werden. In einem Überlappungsbereich 41, der durch einen Rand der Personalisierdatenseite 17 und einen Rand des Falzbereiches 31 der Lasche 26 gebildet wird, können beispielsweise im Abstand zueinander angeordnete Schweißstellen 43 gebildet werden, die eine unlösbare Verbindung darstellen. Analoges gilt für das Laminieren der Personalisierdatenseite 17 und des Falzbereiches 31 der Lasche 26.

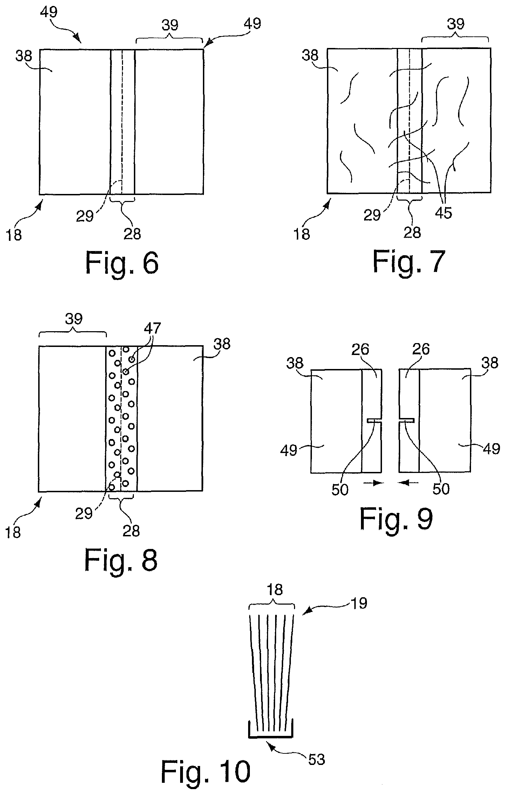

In Figur 6 ist eine schematische Ansicht auf eine Datenseite 18 dargestellt. Eine solche Datenseite 18 ermöglicht das Einbinden in den Bucheinband ohne mechanische Verbindungselemente. Die Datenseite 18 umfasst zumindest eine flexible Schicht 38, welche aus Papier, Pappe, Kunststoff, textilem Gewebe, aus natürlichen und/oder synthetischen Fasern oder einer Kombination dieser Materialien bestehen kann. Diese Datenseite 18 umfasst zumindest einen Datenbereich 39, der für das Aufdrucken, Aufstempeln oder Beschriften von Informationen als auch für das Aufkleben von Visa oder dergleichen vorgesehen ist. Des Weiteren umfasst die Datenseite 18 einen Falzbereich 29 mit einer Falzkante 31, so dass die Datenseite 18 als Doppelseite ausgebildet ist, wobei die Faltkante 29 die Datenseite 18 in zwei gleich große Einzelseiten 38 teilt. Der Falzbereich 28 kann nur im Bereich der Falzkanten 29 liegen. Dieser kann sich jedoch auch seitlich weiter in Richtung auf den Datenbereich 39 erstrecken, so dass der Falzbereich 28 breiter als die Falzkante 29 ausgebildet ist. Beispielsweise ist der Falzbereich 28 der Datenseite 18 mit Kunststoff beschichtet. Somit lässt sich dieser kunststoffbeschichtete Bereich mit einer daran anliegenden weiteren Datenseite 18, Personalisierdatenseite 17 oder Bucheinband 12 beispielsweise durch ein thermisches Verfahren, insbesondere durch Ultraschall-Schweißen, verbinden. Die im Falzbereich aufgebrachte Kunststoffschicht ist zur Herstellung der unlösbaren Verbindung vorgesehen. Unter "Kunststoffbeschichtung" werden schweißbare oder schmelzbare Thermoplaste oder Duroplaste verstanden. Es werden aber auch ganz allgemein solche Materialien verstanden, die sich mit Ultraschall unlösbar mit einer weiteren Schicht verbinden lassen. Dazu gehören dann auch Gewebestoffe oder dergleichen.

Die im Falzbereich 28 aufgebrachte Kunststoffbeschichtung kann auch Sicherheitsmerkmale enthalten, wie beispielsweise Kinegramme, Hologramme als auch Prägungen, Lumineszenzstoffe, Mikrotaggants oder dergleichen. Die Kunststoffbeschichtung erstreckt sich bevorzugt in den Falzbereich. Diese kann auch nur linienförmig unmittelbar entlang der Falzkante 32 verlaufen, um die Verbindungsstelle 16 zu bilden.

Die vorstehenden Ausführungsformen gelten in Analogie auch für eine Klebebeschichtung zur Durchführung eines Laminierverfahrens, durch welche die Datenseiten 18, die Personalisierdatenseite 17 und/oder das Vorsatz 14 mit dem Bucheinband 12 unlösbar verbunden werden können.

Alternativ zur im Falzbereich 28 aufgebrachten Kunststoff- oder Klebebeschichtung der Datenseite 18 kann der Falzbereich 28 auch aus Kunststoff ausgebildet sein. Unter "Kunststoff werden wieder allgemein alle Materialien verstanden, die sich durch ein Ultraschallverfahren mit weiteren Materialien verbinden lassen. Die an den Falzbereich 28 anschließenden Datenbereiche 39 können bei dieser Ausführungsform wiederum aus verschiedenen Materialien bestehen, welche zumindest die Anforderung erfüllen, dass diese beschrift- oder bedruckbar sind.

Die vorstehenden Ausführungen zu Figur 6 gelten auch für eine Datenseite 18, welche einseitig ausgebildet ist, das heißt, dass diese den Datenbereich 39, einen Falzbereich 31 und eine Lasche 26 aufweist.

Die Kunststoff- oder Klebebeschichtung im Falzbereich 28 kann sowohl einseitig als auch beidseitig vorgesehen sein. Ebenso können diese Beschichtungen abschnittsweise vorgesehen sein, wobei diese abschnittsweise Anordnung auch auf der Vorder- und Rückseite in einer alternierenden Weise möglich sind.

In Figur 7 ist eine alternative Ausführungsform einer Datenseite 18 zu Figur 6 dargestellt. Bei dieser Ausführungsform sind zumindest im Falzbereich 28 lange Kunststofffasern 45 eingebracht. Diese langen Kunststofffasern 41 können darüber hinaus auch im Datenbereich 39 verteilt sein. Diese Kunststofffasern 45 stellen eine alternative Ausführungsform zum kunststoffbeschichteten oder klebebeschichteten Falzbereich 28 oder zum Falzbereich 28 aus Kunststoff dar und ermöglichen ebenfalls eine unlösbare Verbindung mit weiteren Datenseiten 18, einer Personalisierdatenseite 17, das Vorsatz 14 und/oder dem Bucheinband 12.

In Figur 8 ist eine weitere alternative Ausführungsform zu Figur 6 dargestellt. Bei dieser Ausführungsform weist der Falzbereich 28 Durchbrechungen 47 und vorzugsweise eine Kunststoff- oder Klebebeschichtung auf. Beim Herstellen der Verbindungsstelle 16 wird ermöglicht, dass die Kunststoff- oder Klebestoffbeschichtung zumindest teilweise in die Durchbrechungen 47 einfließt und unlösbare Verbindungsstellen bildet.

In Figur 9 ist eine weitere alternative Anordnung und Ausgestaltung einer doppelseitigen Datenseite 18 aus zwei Einzelseiten 49 dargestellt. Jede Einzelseite 49 weist eine Lasche 26 auf, die beispielsweise durch einen Schlitz 50 geteilt ist. Dadurch sind die beiden Laschen 26 der Einzeldatenseiten 49 derart übereinanderlappend ineinander steckbar, dass die eine Laschenhälfte oberhalb und die andere Laschenhälfte unterhalb der den gegenüberliegenden Laschen der Datenseite 49 liegt. Beim anschließenden Herstellen der Verbindungsstelle 16 können diese miteinander verbunden werden. Eine solche Anordnung kann ein zusätzliches Sicherheitsmerkmal darstellen. Es versteht sich, dass anstelle der hälftigen Unterteilung der Laschen auch eine mehrteilige Unterteilung möglich ist.

In Figur 10 ist eine weitere alternative Ausgestaltung zur Anordnung der Datenseiten 18 zu einem Buchblock 19 dargestellt. Die Datenseiten 18 sind bezüglich einer Seitenkante gleich ausgerichtet und bilden einen Blockrücken 53. Dieser Buchblockrücken 53 ist beispielsweise durch eine Kunststoffschicht oder Klebeschicht gebildet und hält die einzelnen Datenseiten 18 zusammen. Mittels dieser Kunststoffschicht oder Klebeschicht kann der Buchblock 19 wiederum in den Bucheinband 12 eingebunden werden.

Alternativ zu dieser Ausführungsform können die einzelnen Datenseiten im Bereich des Buchrückens 53 Durchbrechungen aufweisen, wie dies in Figur 8 dargestellt ist, so dass beim Verbinden der Datenseiten 18 die Kunststoff- oder Klebeschicht die einzelnen Durchbrechungen durchsetzt und unlösbare Verbindungspunkte beziehungsweise Schweiß- oder Klebepunkte gebildet werden.

Die Herstellung eines buchartigen Dokumentes 11 gemäß Figur 2 erfolgt dahingehend, dass zunächst der Bucheinband 12 und anschließend das Vorsatz 14, die Personalisierdatenseite 17 und die Datenseite 18 übereinander gelegt und ausgerichtet werden. Anschließend kann beispielsweise mittels eines Ultraschall-Schweißverfahrens die Verbindungstelle 16 gebildet werden, wobei beispielsweise mittels eines Ultraschall-Schweißkopfes einer oder mehrere Verbindungspunkte - also Schweißpunkte - entlang der Verbindungsstelle 16 nacheinander oder gleichzeitig gesetzt werden können. Diese Schweißpunkte können punktförmig oder linienförmig oder durchgehend entlang der Verbindungsstelle 16 ausgebildet sein. Bei der Herstellung werden alle miteinander zu verbindenden Komponenten für das Dokument 11 gleichzeitig miteinander verbunden, so dass die Komponenten des Dokumentes 11 gemeinsam durch eine unlösbare Verbindungsstelle 16 miteinander verbunden sind.

Alternativ kann bei dieser Ausführungsform zunächst der Buchblock 19 bestehend aus den Datenseiten 18 und/oder der Personalisierdatenseite 17 und/oder dem Vorsatz 14 gebildet werden, so dass anschließend durch eine herkömmliche Verbindung der Bucheinband 12 und das Vorsatz 14 miteinander verbunden werden.

Eine analoge Herstellungsweise gilt für die Ausführungsformen gemäß den Figuren 3 und 4.

## Patentansprüche

1. Buchartiges Dokument, insbesondere Identifikationsdokument, mit einem Bucheinband (12), der einen Falzbereich (35) aufweist, mit mehreren Datenseiten (17, 18), die zumindest eine flexible Schicht (38) aufweisen, welche zumindest einen Datenbereich (39) und einen Falzbereich (28) umfassen, in dem eine Falzkante (29) gebildet ist, welche zumindest abschnittsweise eine Verbindungskomponente zur unlösbaren Verbindung mit einer weiteren Datenseite und/oder einem Vorsatz (14) und/oder einem Bucheinband (12) umfasst, und die Datenseiten (17, 18) in den Falzbereich (35) des Bucheinbandes (12) zumindest abschnittsweise durch Schweißen oder Laminieren unlösbar eingebunden sind, **dadurch gekennzeichnet, dass** die zumindest abschnittsweise im Falzbereich (28) vorgesehene Verbindungskomponente ein- oder beidseitig auf der flexiblen Schicht (38) aufgebracht ist.

2. Dokument nach Anspruch 1, **dadurch gekennzeichnet, dass** die Datenseite (17, 18) einen Falzbereich (28, 31) mit einer Falzkante (29, 32) aufweist und die zumindest eine Datenseite (17, 18) mit der jeweiligen Falzkante (29, 32) und eine Falzkante (36) im Falzbereich (35) des Bucheinbandes (12) ohne mechanische Verbindungselemente zumindest abschnittsweise unlösbar miteinander verbunden sind.

3. Dokument nach Anspruch 1, **dadurch gekennzeichnet, dass** die Datenseiten (17, 18) durch Schweißen oder Laminieren zu einem Buchblock (19) verbindbar sind und der Buchblock (19) in den Bucheinband (12) zumindest abschnittsweise unlösbar eingebunden ist.

4. Dokument nach einem der vorhergehenden Ansprüche, **dadurch gekennzeichnet, dass** die zumindest eine Datenseite (17, 18) als Personalisierdatenseite (17) ausgebildet ist.

5. Dokument nach einem der vorhergehenden Ansprüche, **dadurch gekennzeichnet, dass** der Bucheinband (12) an einer zur zumindest einen Datenseite (17, 18) weisenden Innenseite (18) eine Personalisierdatenseite (17) umfasst, oder dass der Bucheinband (12) zumindest eine im Falzbereich (36) einlaminierte Lasche (26) aufweist, an der eine Datenseite (17, 18), insbesondere Personalisierdatenseite (17), einhängbar ist.

6. Dokument nach einem der vorhergehenden Ansprüche, **dadurch gekennzeichnet, dass** mehrere Datenseiten (17, 18) entlang deren Seitenkante zueinander ausgerichtet sind und einen Buchblockrücken (53) bilden und die Datenseiten (17, 18) durch eine Kunststoffschicht oder Klebeschicht zueinander fixiert sind oder nach Art eines Klemmleistenprinzips oder nach Art einer Durchheftung miteinander verbunden sind.

7. Dokument nach einem der Ansprüche 1 bis 5, **dadurch gekennzeichnet, dass** die Datenseite (18) als Doppelseite aus zwei Einzelseiten (49) ausgebildet ist, die jeweils eine Lasche (26) aufweisen, welche in der Mitte geteilt sind, so dass bei der Bildung einer doppelseitigen Datenseite (18) mit den Einzelseiten (49) eine Laschenhälfte oberhalb und die andere Laschenhälfte unterhalb der jeweiligen gegenüberliegenden Laschenhälften der Einzelseite (49) und mit dem Bucheinband (12) in dieser Anordnung eingebunden ist.

8. Datenseite für ein buchartiges Dokument, insbesondere nach Anspruch 1, die zumindest eine flexible Schicht (38) aufweist, welche zumindest einen Datenbereich (39) und einen Falzbereich (28) umfasst, in dem eine Falzkante (29) gebildet ist, welcher zumindest abschnittsweise eine Verbindungskomponente zur unlösbaren Verbindung mit einer weiteren Datenseite (17, 18) und/oder einem Vorsatz (14) und/oder einem Bucheinband (12) aufweist, **dadurch gekennzeichnet, dass** die zumindest abschnittsweise im Falzbereich (28) vorgesehene Verbindungskomponente ein- oder beidseitig auf der flexiblen Schicht (38) aufgebracht ist.

9. Datenseite nach Anspruch 8, **dadurch gekennzeichnet, dass** die zumindest abschnittsweise im Falzbereich (28) vorgesehene Verbindungskomponente aus einem schweißbaren Kunststoff besteht.

10. Datenseite nach Anspruch 8, **dadurch gekennzeichnet, dass** die zumindest abschnittsweise im Falzbereich (28) vorgesehene Verbindungskomponente als schweißbare Kunststoffbeschichtung oder Klebebeschichtung ausgebildet ist.

11. Datenseite nach einem der Ansprüche 8 bis 10, **dadurch gekennzeichnet, dass** diese doppelseitig oder als Einzelseite (49) mit einer Lasche (26) ausgebildet ist.

12. Datenseite nach einem der Ansprüche 8 bis 11, **dadurch gekennzeichnet, dass** die flexible Schicht (38) im Falzbereich (28) Durchbrechungen aufweist, die beim unlösbaren Verbinden mit weiteren Datenseiten (17, 18), dem Vorsatz (14) und/oder dem Bucheinband (12) mit einer Kunststoffbeschichtung zumindest teilweise verfüllbar sind.

13. Datenseite nach einem der Ansprüche 8 bis 12, **dadurch gekennzeichnet, dass** die zumindest abschnittsweise im Falzbereich (28, 31, 36) vorgesehene Verbindungskomponente zumindest ein Sicherheitsmerkmal enthält oder mit einem Sicherheitsmerkmal einbringbar oder aufbringbar ist.

14. Datenseite nach einem der Ansprüche 8 bis 11, **dadurch gekennzeichnet, dass** die flexible Schicht (38) zumindest im Falzbereich (28) lange Kunststofffasern (45) aufweist, die vorzugsweise auch Sicherheitsmerkmale der Datenseite (17, 18) bilden.

15. Verfahren zur Herstellung eines buchartigen Dokumentes (11), mit einem Bucheinband (12) und mit mehreren Datenseiten (17, 18), wobei der Bucheinband (12) einen Falzbereich (35) mit einer Falzkante (36) aufweist und die Datenseiten (17, 18) mit deren Falzbereichen (28, 31) zum Falzbereich (35) des Bucheinbandes (12) positioniert werden und die Datenseiten (17, 18) in den Falzbereich (36) des Bucheinbandes (12) durch Schweißen oder Laminieren unlösbar eingebunden werden, **dadurch gekennzeichnet, dass** die Datenseiten (17, 18) nach einem der Ansprüche 8 bis 14 in den Falzbereich (35) des Bucheinbandes (12) unlösbar eingebunden werden.

## Claims

1. A book-like document, in particular an identification document, with a binding (12) which has a fold region (35), with a plurality of data pages (17, 18) which have at least one flexible layer (38) and which comprise at least one data area (39) and a fold region (28) in which a folded edge (29) is formed which comprises, at least in sections, a connecting component permitting an undetachable connection with a further data page and/or an end paper (14) and/or a binding (12), said data pages (17, 18) being, at least in sections, undetachably incorporated into the fold region (35) of the binding (12) through welding or laminating, **characterised in that** the connecting component which is provided at least in sections in the fold region (28) is applied onto the flexible layer (38) on only one side or on both sides thereof.

2. The document as claimed in claim 1, **characterised in that** the data page (29, 32) has a fold region (28, 31) with a folded edge (29, 32) and **in that** the at least one data page (17, 18) including the respective folded edge (29, 32) and a folded edge (36) present in the fold region (35) of the binding (12) are undetachably connected with each other at least in sections without any mechanical connecting elements.

3. The document as claimed in claim 1, **characterised in that** the data pages (17, 18) may be connected by means of welding or laminating so as to form a book block (19) and **in that** the book block (19) is, at least in sections, undetachably incorporated into the binding (12).

4. The document as claimed in any of the preceding claims, **characterised in that** the at least one data page (17, 18) is realised as a personalisation data page (17).

5. The document as claimed in any of the preceding claims, **characterised in that** the binding (12) comprises on an inner page (18) facing towards the at least one data page (17, 18), a personalisation data page (17), or **in that** the binding (12) has at least one tab (26) incorporated by laminating in the fold region (36) and permitting a data page (17, 18), in particular a personalisation data page (17) to be cased in.

6. The document as claimed in any of preceding claims, **characterised in that** a plurality of data pages (17, 18) are aligned with respect to one another along their lateral edges and form a book block spine (53) and **in that** the data pages (17, 18) are fixed in position with respect to each other by a plastic layer or an adhesive layer or are connected with each other in the manner of a clamping strap principle or in the manner of a stitch-through connection.

7. The document as claimed in any one of claims 1 to 5, **characterised in that** the data page (18) is in the form of a double page consisting of two individual pages (49) having each a tab (26) which is cut across the middle such that when a double page (18) is formed by the individual pages (49), one tab half is disposed above, and the other tab half is disposed below the respective opposite tab halves of the individual page (49) and is incorporated in this disposition into the binding (12).

8. A data page for a book-like document, in particular as claimed in claim 1, which has at least one flexible layer (38) comprising at least one data area (39) and a fold region (28) in which a folded edge (29) has been formed and which has, at least in sections, a connecting component permitting an undetachable connection with a further data page (17, 18) and/or an end paper (14) and/or a binding (12), **characterised in that** the connecting component provided at least in sections in the fold region (28) is applied onto the flexible layer (38) on only one side or on both sides thereof.

9. The data page as claimed in claim 8, **characterised in that** the connecting component which is provided at least in sections in the fold region (28) consists of a weldable plastic material.

10. The data page as claimed in claim 8, **characterised in that** the connecting component which is provided at least in sections in the fold region (28) is realised as a weldable plastic coating or an adhesive coating.

11. The data page as claimed in any one of claims 8 to 10, **characterised in that** the latter is realised as a double page or as an individual page (49) having a tab (26).

12. The data page as claimed in any one of claims 8 to 11, **characterised in that** the flexible layer (38) has apertures formed in the fold region (28) which may at least partially be filled with a plastic coating as the latter is being undetachably connected with other data pages (17, 18), the end paper (14) and/or the binding (12).

13. The data page as claimed in any one of claims 8 to 12, **characterised in that** the connecting component which is provided at least in sections in the fold region (28, 31, 36) contains at least one security feature or may be inserted or applied together with a security feature.

14. The data page as claimed in any one of claims 8 to 11, **characterised in that** the flexible layer (38) is provided, at least in the fold region (28), with long plastic fibres which preferably also form security features of the data page (17, 18).

15. A method of producing a book-like document having a binding (12) and a plurality of data pages (17, 18), the binding (12) having a fold region (35) including a folded edge (36) and the data pages (17, 18) being positioned such that their fold regions (28, 31) coincide with the fold region (35) of the binding (12), and the data pages (17, 18) being undetachably incorporated into the fold region (36) of the binding (12) through welding or laminating, **characterised in that** the data pages (17, 18) are undetachably incorporated into the fold region (35) of the binding (12) according to any one of claims 8 to

## Revendications

1. Document de type livret, en particulier document d'identification, avec une reliure (12) qui présente une zone de pliage (35), avec plusieurs pages de données (17, 18) qui présentent au moins une couche flexible (38) et qui comprennent au moins une zone de données (39) et une zone de pliage (28) dans laquelle est formée une arête de pliage (29) qui comprend, au moins par sections, un composant d'assemblage en vue de réaliser un assemblage indissociable avec une autre page de données et/ou une page de garde (14) et/ou une reliure (12), et les pages de données (17, 18) étant assemblées au moins par sections, de manière indissociable par soudage ou par lamination dans la zone de pliage (35) de la reliure (12), **caractérisé en ce que** le composant d'assemblage prévu au moins par sections dans la zone de pliage (28) est appliqué d'un seul côté ou des deux côtés sur la couche flexible (38).

2. Document selon la revendication 1, **caractérisé en ce que** la page de données (17, 18) présente une zone de pliage (28, 31) avec une arête de pliage (29, 32) et que ladite au moins une page de données (17, 18) avec l'arête de pliage correspondante (29, 32) et une arête de pliage (36) située dans la zone de pliage (35) de la reliure (12) sont assemblées l'une à l'autre, au moins par sections, de manière indissociable sans éléments d'assemblage mécaniques.

3. Document selon la revendication 1, **caractérisé en ce que** les pages de données (17, 18) peuvent être assemblées par soudage ou par lamination pour former un bloc de livret (19) et que le bloc de livret (19) est incorporé, au moins par sections, de manière indissociable dans la reliure (12).

4. Document selon l'une quelconque des revendications précédentes, **caractérisé en ce que** ladite au moins une page de données (17, 18) est réalisée en tant que page de données de personnalisation (17).

5. Document selon l'une quelconque des revendications précédentes, **caractérisé en ce que** la reliure (12) comprend, sur une page intérieure (18) tournée vers ladite au moins une page de données (17, 18), une page de données de personnalisation (17), ou **en ce que** la reliure (12) présente au moins une patte (26) assemblée par lamination dans la zone de pliage (36) à laquelle peut être emboîtée une page de données (17, 18), en particulier une page de données de personnalisation (17).

6. Document selon l'une quelconque des revendications précédentes, **caractérisé en ce que** plusieurs pages de données (17, 18) sont orientées les unes vers les autres le long de leur bord latéral et forment un dos de bloc de livret (53), et **en ce que** les pages de données (17, 18) sont fixées les unes par rapport aux autres par une couche de matière plastique ou une couche adhésive ou qu'elles sont assemblées les unes aux autres selon le principe de fixation par baguettes de serrage ou selon le principe d'assemblage par piquage.

7. Document selon l'une quelconque des revendications 1 à 5, **caractérisé en ce que** la page de données (18) est réalisée en tant que page double constituée par deux pages simples (49) lesquelles présentent respectivement une patte (26) divisée au centre de sorte que lorsqu'une page de données double (18) est formée à l'aide des pages simples (49), une moitié de patte est disposée au-dessus et l'autre moitié de patte est disposée au-dessous des moitiés de patte respectives de la page simple (49) qui leur font face et qu'elles sont assemblées à la reliure (12) dans cette disposition.

8. Page de données pour un document de type livret, en particulier selon la revendication 1, laquelle présente au moins une couche flexible (38) qui comprend au moins une zone de données (39) et une zone de pliage (28) dans laquelle est formée une arête de pliage (29) et laquelle présente, au moins par sections, un composant d'assemblage permettant de réaliser un assemblage indissociable avec une autre page de données (17, 18) et/ou une page de garde (14) et/ou une reliure (12), **caractérisée en ce que** le composant d'assemblage prévu au moins par sections dans la zone de pliage (28) est appliqué sur la couche flexible (38) d'un seul côté ou des deux côtés.

9. Page de données selon la revendication 8, **caractérisée en ce que** le composant d'assemblage prévu au moins par sections dans la zone de pliage (28) est constitué par une matière plastique soudable.

10. Page de données selon la revendication 8, **caractérisée en ce que** le composant d'assemblage prévu au moins par sections dans la zone de pliage (28) est réalisé en tant que revêtement en matière plastique soudable ou en tant que revêtement adhésif.

11. Page de données selon l'une quelconque des revendications 8 à 10, **caractérisée en ce que** celle-ci est réalisée en tant que page double ou en tant que page simple (49) pourvue d'une patte (26).

12. Page de données selon l'une quelconque des revendications 8 à 11, **caractérisée en ce que** la couche flexible (38) présente dans la zone de pliage (28) des perforations qui peuvent être remplies au moins partiellement avec un revêtement en matière plastique lors de la réalisation de l'assemblage indissociable avec d'autres pages de données (17, 18), la page de garde (14) et/ou la reliure (12).

13. Page de données selon l'une quelconque des revendications 8 à 12, **caractérisée en ce que** le composant d'assemblage prévu au moins par sections dans la zone de pliage (28, 31, 36) contient au moins une caractéristique de sécurité ou peut être inséré ou appliqué ensemble avec une caractéristique de sécurité.

14. Page de données selon l'une quelconque des revendications 8 à 11, **caractérisée en ce que** la couche flexible (38) présente au moins dans la zone de pliage (28) des fibres synthétiques longues (45) qui forment, de préférence, également des caractéristiques de sécurité de la page de données (17, 18).

15. Procédé de fabrication d'un document (11) de type livret, avec une reliure (12) et avec plusieurs pages de données (17, 18), la reliure (12) présentant une zone de pliage (35) avec une arête de pliage (36) et les pages de données (17, 18) étant positionnées avec leurs zones de pliage (28, 31) par rapport à la zone de pliage (35) de la reliure (12) et les pages de données (17, 18) étant assemblées de manière indissociable par soudage ou par lamination dans la zone de pliage (36) de la reliure (12), **caractérisé en ce que** les pages de données (17, 18) sont assemblées de manière indissociable selon l'une quelconque des revendications 8 à 14 dans la zone de pliage (35) de la reliure (12).
